# EUROPÄISCHE PATENTSCHRIFT

(11) **EP 1 094 210 B1**
(45) Veröffentlichungstag und Bekanntmachung des Hinweises auf die Patenterteilung: **16.04.2003**
(21) Anmeldenummer: 00126565.1
(22) Anmeldetag: 08.01.1999
(51) Int. Cl.: F02B 27/02, F02B 75/22

(54) **Sauganlage zur Verbrennungsluftversorgung einer Brennkraftmaschine**
Intake system for combustion air supply for an internal combustion engine
Système d'admission pour l'alimentation de air comburant d'un moteur à combustion interne

(30) Priorität: 31.01.1998 DE 19803804
(43) Veröffentlichungstag der Anmeldung: 25.04.2001
(62) Teilanmeldung aus: 99901590.2
(73) Patentinhaber: Volkswagen Aktiengesellschaft, 38436 Wolfsburg (DE)
(72) Erfinder: Lieske, Stefan, Dipl.-Ing., 38302 Wolfenbüttel (DE); Scholz, Holger, 38106 Braunschweig (DE)

(56) Entgegenhaltungen:
- EP-A- 0 400 952
- EP-A- 0 450 530
- PATENT ABSTRACTS OF JAPAN vol. 017, no. 447 (M-1464), 17. August 1993 (1993-08-17) & JP 05 098969 A (HONDA MOTOR CO LTD), 20. April 1993 (1993-04-20)
- PATENT ABSTRACTS OF JAPAN vol. 014, no. 323 (M-0997), 11. Juli 1990 (1990-07-11) & JP 02 108818 A (MAZDA MOTOR CORP), 20. April 1990 (1990-04-20)

## Beschreibung

Die Erfindung betrifft eine Sauganlage zur Verbrennungsluftversorgung einer Brennkraftmaschine, insbesondere für ein Kraftfahrzeug, gemäß dem Oberbegriff des Anspruchs 1.

Aus Asia-Pacific Automotive Report, Band 234, 5.4.1996 ist es bekannt, mittels zweier schaltbarer Klappen ein Resonanzrohr lang oder kurz zu schalten und somit eine entsprechende Resonanzlänge wahlweise zu ändern. Dieses System schaltet jedoch nur zwischen verschiedenen Resonanzzuständen hin und her, was eine optimale Zylinderfüllung lediglich über einen eingeschränkten Drehzahlbereich gewährleistet. Daher ist eine dritte schaltbare Klappe vorgesehen, welche in geöffnetem Zustand einen Strömungsquerschnitt für Verbrennungsluft entsprechend erhöht, so daß bei hohen Umdrehungszahlen eine große Massenströmung gewährleistet ist. Dies zerstört jedoch vollständig jeglichen Resonanzeffekt im Ansaugsystem der Verbrennungsluft und unterstützt in keiner Weise zusätzlich die Zylinderfüllung.

Aus der EP-A-0 400 952 ist eine Ansauganlage für eine Brennkraftmaschine mit mehreren Zylindern, die auf zwei Zylinderreihen aufgeteilt sind, bekannt, wobei zwei Luftsammler mittels einer Resonanzklappe wahlweise miteinander verbindbar sind. In jedem Luftsammler ist eine oder sind mehrere Ausgleichsklappen vorgesehen, die in geschlossener Stellung den jeweiligen Sammler in eine (U-förmige) lange Ansaugstrecke teilt bzw. teilen. Bei hohen Drehzahlen ergibt sich bei geöffneter Klappe ein Luftsammler mit großem bzw. vergrößertem Volumen, wobei von jedem Sammler zu jeweils einer Zylinderreihe führende Saugrohre vorgesehen sind.

Der vorliegenden Erfindung liegt die Aufgabe zugrunde, eine verbesserte Sauganlage der obengenannten Art zur Verfügung zu stellen, wobei die obengenannten Nachteile überwunden werden und über einen möglichst großen Drehzahlbereich der Brennkraftmaschine eine optimale Zylinderfüllung mit Verbrennungsluft erzielt wird.

Diese Aufgabe wird erfindungsgemäß durch eine Sauganlage der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß die Brennkraftmaschine eine Kurbelwelle mit 90-Grad-Kurbelwinkel und n Zylindern aufweist, wobei jeweils n/2 oder (n-1)/2 der Zylinder über jeweilige Saugrohre mit einem ersten Luftsammler und die anderen n/2 oder (n+1)/2 Zylinder über jeweilige Saugrohre mit einem zweiten Luftsammler verbunden sind, wobei die Luftsammler jeweils benachbart zu einer Zylinderbank und gegenüberliegend zur jeweils anderen Zylinderbank angeordnet sind und die Saugrohre eines Luftsammlers teilweise die Saugrohre des anderen Luftsammlers kreuzend zur gegenüberliegenden Zylinderbank führen und teilweise überkopf zu der benachbarten Zylinderbank führen.

Dies hat den Vorteil, daß auf baulich einfache und bauraumoptimierte Weise wahlweise für niedrige Drehzahlbereiche der Brennkraftmaschine eine Resonanzaufladung durch Schließen der Ausgleichsklappen oder für hohe Drehzahlbereiche der Brennkraftmaschine eine Schwingrohraufladung durch Öffnen der Ausgleichsklappen realisiert ist.

Für Brennkraftmaschinen mit Zylindern, welche auf getrennten Zylinderbänken angeordnet sind, beispielsweise bei einem Acht-Zylindermotor in V- oder Doppel-V-Anordnung bzw. VR-Anordnung, ist es besonders vorteilhaft, zwei separate Luftsammler vorzusehen.

Einen zusätzlichen Resonanzzustand für einen mittleren Drehzahlbereich der Brennkraftmaschine erzielt man dadurch, daß je zwei Luftsammler über ein Resonanzrohr miteinander verbunden sind, wobei das Resonanzrohr eine Resonanzklappe zum wahlweise Öffnen oder Schließen desselben derart aufweist, daß die jeweiligen Luftsammler wahlweise über das Resonanzrohr miteinander verbunden sind oder nicht.

Zweckmäßigerweise ist n = 4 oder 8. Im letzterem Fall lautet eine Zündfolge der Zylinder 1 bis 8 beispielsweise folgendermaßen: 1-5-7-4-8-3-2-6.

Bevorzugt sind dabei zur Gewährleistung ungestörter Ansaugvorgänge die Zylinder 1, 2, 7, 8 mit dem ersten Luftsammler und die Zylinder 5, 6, 3, 4 mit dem zweiten Luftsammler verbunden.
Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Sauganlage in teilweise geschnittener Aufsicht,
- Fig. 2: in einem Schnitt entlang Linie A-A von Fig. 5,
- Fig. 3: in einem Schnitt entlang Linie B-B von Fig. 5 und
- Fig. 4 bis 6: eine schematische Veranschaulichung von unterschiedlichen Schaltzuständen.

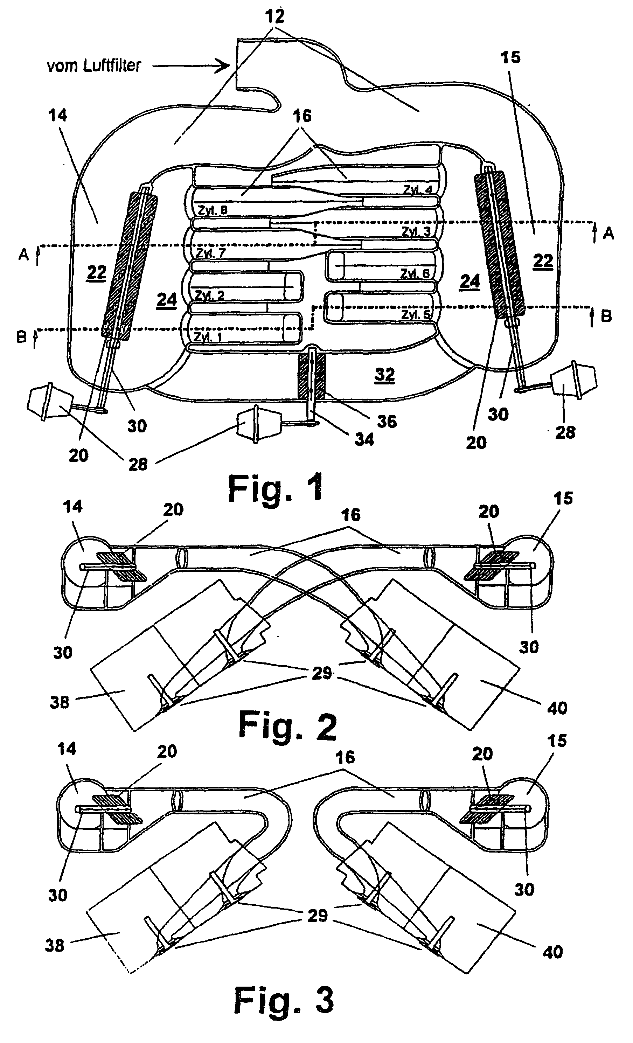

Die in Fig. 1 bis 3 dargestellte, bevorzugte Ausführungsform einer erfindungsgemäßen Sauganlage umfaßt in Strömungsrichtung gesehen einen nicht dargestellten Luftfilter, eine Vorsaugstrecke 12, Luftsammler 14 und 15 sowie zylinderindividuelle Saugrohre 16, welche zu nicht dargestellten Lufteinlässen für Zylinder einer Brennkraftmaschine führen. In den Luftsammlern 14, 15 ist jeweils eine Ausgleichsklappe 20 drehbar derart angeordnet, daß sie den jeweiligen Luftsammler 14 bzw. 15 im geschlossenen Zustand in zwei Teile 22, 24 teilt. Ein luftfilterseitiger Raum 22 des Luftsammlers 14 bzw. 15 wirkt dabei zusätzlich als Vorsaugstrecke, während ein saugrohrseitiger Raum 24 als Luftsammler mit reduziertem Volumen wirkt. In geschlossener, d.h. teilender Schaltstellung strömt von der Brennkraftmaschine angesaugte Verbrennungsluft über eine verlängerte Vorsaugstrecke und die Dimensionen der Bauteile ist derart gewählt, daß sich für einen unteren Drehzahlbereich der Brennkraftmaschine eine Resonanzladung ergibt, da eine Reflexion von Druckwellen am Luftfiltersystem und in der Vorsaugstrecke die Strömungsdynamik beherrscht.

In dem in Fig. 1 dargestellten Schaltzustand sind die Ausgleichsklappen 20 von einem Antrieb 28, wie beispielsweise einem Elektromotor, um 90 Grad gedreht, so daß sich ein jeweiliger Luftsammler 14, 15 mit vergrößertem Volumen aus der Summe der Räume 22 und 24 ergibt und ferner die Vorsaugstrecke 12 reduziert ist. Nun beherrschen die zweckmäßigerweise als Schwingrohre für die Brennkraftmaschine in einem oberen Drehzahlbereich ausgebildeten und dimensionierten Saugrohre 16 das Strömungsverhalten der von der Brennkraftmaschine angesaugten Verbrennungsluft, so daß sich eine Schwingrohraufladung ergibt. In dieser Schaltstellung bestimmt also die Reflexion der Druckwellen am Luftsammler 14 das Systemverhalten.

Die Ausgleichsklappe 20 muß nicht notwendigerweise in einem Stück im Luftsammler 14 angeordnet sein. Vielmehr ist es auch möglich, die Ausgleichsklappe in zwei oder mehr Abschnitte zu unterteilen, welche gemeinsam oder getrennt gedreht werden und separat gelagert sind. Dies hat den Vorteil, daß eine Neigung großer Ausgleichsklappen 20 zum Flattern wirksam reduziert ist. Ferner ist es in einer vorteilhaften Weiterbildung der Erfindung auch möglich mehrere Ausgleichsklappen 20 hintereinander vorzusehen derart, daß das Luftsammlervolumen und damit auch die Länge der Vorsaugstrecke in mehreren Stufen vergrößert und verkleinert werden können.

Der besondere Vorteil der erfindungsgemäßen Sauganlage liegt in der Kombination des Schwingrohr- und des Resonanzprinzips. Je nach Stellung der Ausgleichsklappen 20 erfolgt gezielt entweder eine Resonanzaufladung oder eine Schwingrohraufladung mit ein und derselben Sauganlage. Hierbei sind jedoch nicht mehrere und entsprechend verschieden dimensionierte Saugrohre oder Luftsammler notwendig.

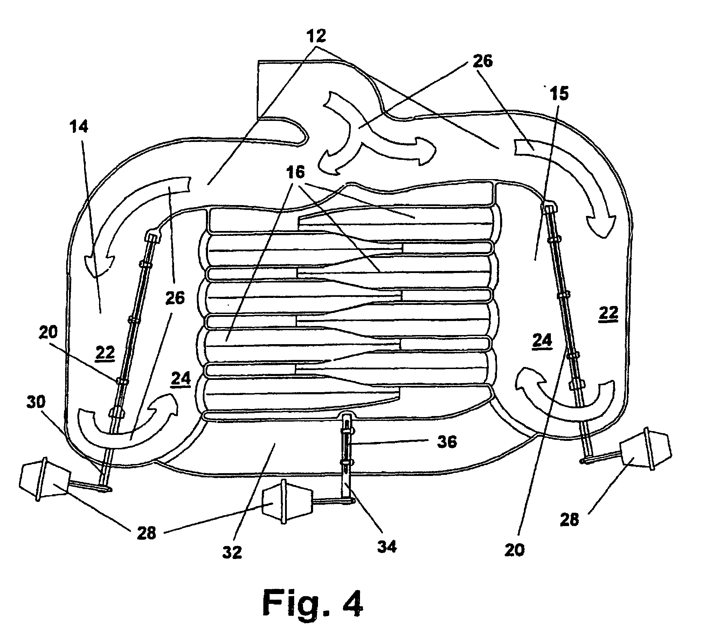

Die erfindungsgemäße Sauganlage eignet sich beispielsweise für 8-Zylindermotoren, wie in den Fig. 1 bis 3 dargestellt. Hierbei sind die Zylinder der Brennkraftmaschine in doppelter V-Anordnung, d.h. als sogn. VR-Motor, aufgereiht. Die zwei Luftsammler 14 und 15 sind jeweils mit vorbestimmten Zylindern der Brennkraftmaschine verbunden und versorgen Idie Brennkraftmaschine über Lufteinlässe 29 mit Verbrennungsluft. Die Vorsaugstrecke 12 versorgt die Luftsammler 14 und 15 mit Verbrennungsluft. In beiden Luftsammlern 14, 15 ist je eine drehbar um eine Achse 30 gelagerte Ausgleichsklappe 20 angeordnet. Zusätzlich ist in einer Art Parallelschaltung bezüglich der Saugrohre 16 ein die zwei Luftsammler 14 und 15 verbindendes Resonanzrohr 32 vorgesehen. In dem Resonanzrohr 32 ist eine um eine Achse 34 drehbar gelagerte Resonanzklappe 36 vorgesehen, welche wahlweise, je nach Stellung, eine fluidleitende Verbindung zwischen den Luftsammlem 14 und 15 über das Resonanzrohr 32 herstellt oder nicht. Die Ausgleichsklappen 20 und die Resonanzklappe 36 sind vom Antrieb 28, beispielsweise jeweiligen Elektromotoren, derart betätigbar, daß die Klappen 20 und 36 entweder in einer offenen oder geschlossenen Stellung sind. Durch entsprechende Kombination der geöffneten und geschlossenen Stellungen der Klappen 20 und 36 ergeben sich im wesentlichen drei unterschiedliche Schaltzustände, welche später anhand der Fig. 4 bis 6 näher beschrieben werden.

Die erfindungsgemäße Ausführungsform ist für eine Brennkraftmaschine mit einer sogn. 90-Grad-Kurbelwelle vorgesehen.

Bei dem erfindungsgemäßen Saugrohrkonzept gemäß der Fig. 1 bis 3 handelt es sich um ein kombiniertes Schwingrohr-Resonanzsystem, bei dem die Volumina der Sammler 14 und 15 und die Längen der jeweiligen Vorrohre 12 schaltbar sind. Das System ermöglicht einen hohen Liefergrad über ein breites Drehzahlspektrum. Es kann bauraumoptimiert sehr flach ausgeführt werden.

Für die Zündfolge **1-5-7-4-8-3-2-6** ("90° Komfort-Kurbelwelle") gemäß der erfindungsgemäßen Ausführungsform der Fig. 1 bis 3 müssen zur Gewährleistung ungestörter Ansaugvorgänge die Zylinder 1,2,7 und 8 bzw. die Zylinder 3,4,5 und 6 aus jeweils einem gemeinsamen Luftsammler 14, 15 versorgt werden (Fig. 1). Dazu sind beispielsweise die Saugrohre 16 der Zylinder 1,2,5 und 6 "überkopf', wie in Fig. 3 dargestellt, und die Saugrohre 16 der Zylinder 3,4,7 und 8 "gekreuzt", wie in Fig. 2 dargestellt, angeordnet.

Durch die schaltbare Volumenänderung der Luftsammler 14 und 15 mittels der Ausgleichsklappen 20 wird die Abstimmung der Systemschwingung insbesondere im unteren Drehzahlbereich durchgeführt. Dazu wird durch eine Schaltung das schwingfähige Luftsammlervolumen im Zusammenhang mit der Geometrie der Vorsaugstrecke 12 zwischen Luftsammler 14, 15 und Luftfilter (in Fig. 1 bis 3 nicht dargestellt) in ein schwingfähiges Resonanzsystem umgeschaltet.

Das Luftsammlervolumen kann durch eine entsprechende Schaltung der Ausgleichsklappen 20 verkleinert und ein Teil des Luftsammlervolumens als rohrähnliche Verlängerung 22 der Vorsaugstrecke 12 genutzt werden (Fig. 4). Damit wird eine den unteren Drehzahlen angepaßte Eigenfrequenz des Schwingungssystems erzeugt, die zur Resonanzaufladung genutzt wird.

Durch die schaltbare Querverbindung der beiden Luftsammler 14 und 15 mittels des Resonanzrohres 32 wird eine Resonanzschwingung zwischen den beiden Luftsammlern 14 und 15 ermöglicht. Durch die Auslegung der Resonanzrohrlänge und des Resonanzrohrdurchmessers wird eine Anpassung des Resonanzsystems an das jeweilige Motorsystem durchgeführt. Dieses Resonanzsystem wird insbesondere im mittleren Drehzahlbereich zur Optimierung der Saugrohrschwingung eingesetzt.

Bei geschlossener Resonanzklappe 36 im auch als Querrohr bezeichneten Resonanzrohr 32 wird eine Schwingrohraufladung durch die Saugrohre 16 und das Luftsammlervolumen dargestellt. Die Abstimmung des Systems erfolgt durch Saugrohrdurchmesser und Saugrohrlänge sowie Luftsammlervolumen 22, 24 in Zusammenhang mit der Sauganregung durch die Zylinder.

Unterschiede in den Schwinglängen der Saugrohre 16 infolge unterschiedlicher Kanallängen in Zylinderköpfen werden durch die Saugrohrführung zwischen Zylinderkopf und Hauptsammler (in den Fig. nicht dargestellt) ausgeglichen. Bei Motoren mit variabler Nockenwelle wird diesem Umstand zusätzlich beispielsweise durch unterschiedliche Einlaßnockenkonturen Rechnung getragen. Weiterhin können definierte Druckverluste der einzelnen Saugrohre 16 als Kompensationsmaßnahme genutzt werden.

Im folgende wird unter Bezugnahme auf die Fig. 4 bis 6 das Funktionsprinzip der Sauganlage erläutert. Die Fig. 4 bis 6 zeigen dabei lediglich schematisch jeweilige teilweise geschnittene Aufsichten der Sauganlage, wobei jedoch nicht wie nach der Erfindung Saugrohre über Kopf zur benachbarten Zylinder bank geführt sind.

Die Schaltstufe 1 (Fig. 4) dient der Zylinderfüllung im unteren Drehzahlbereich. Dazu werden die Sammlervolumina durch das Schließen der Ausgleichsklappen 20 verkleinert und die Filterluftansaugstrecken 12 durch die abgetrennten Luftsammlerbereiche 22 und 24 verlängert. Die Resonanzklappe 36 zwischen den Luftsammlem 14 und 15 bleibt verschlossen. Bei Motoren mit variabler Nockenwelle sind bevorzugt die Einlaßnockenwellen in Momentenstellung (frühe Öffnungszeiten) geschaltet. In dieser Schaltstellung wird die Reflexion der Druckwellen am Luftfiltersystem und in der Vorsaugstrecke 12 bedeutsam. Dadurch wird eine Resonanzaufladung im unteren Drehzahlbereich erzeugt. Die Teilrohre des durch die Resonanzklappe verschlossenen Querrohres bzw. Resonanzrohres 32 werden dabei als λ/4-Rohre zur Unterstützung der Systemschwingung des Luftsammlers 14, 15 genutzt.

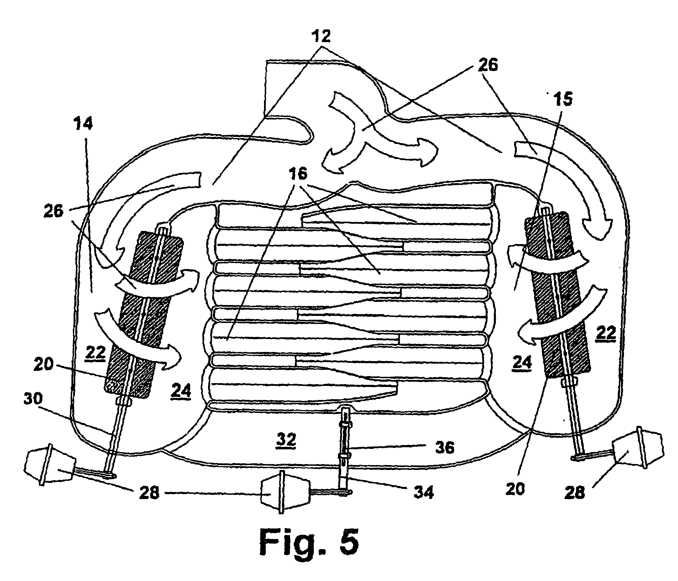

In der Schaltstufe 2 (Fig. 5) werden die Sammlervolumina durch Öffnen der Ausgleichsklappen 20 vergrößert. Die Resonanzklappe 36 ist geschlossen. Bei Motoren mit variabler Nockenwelle stehen die Einlaßnockenwellen bevorzugt in Frühstellung. In dieser Schaltstellung bestimmt die Reflexion der Druckwellen am Luftsammler 14, 15 das Systemverhalten. Das erfindungsgemäße Saugsystem arbeitet nach dem Prinzip der Schwingrohraufladung.

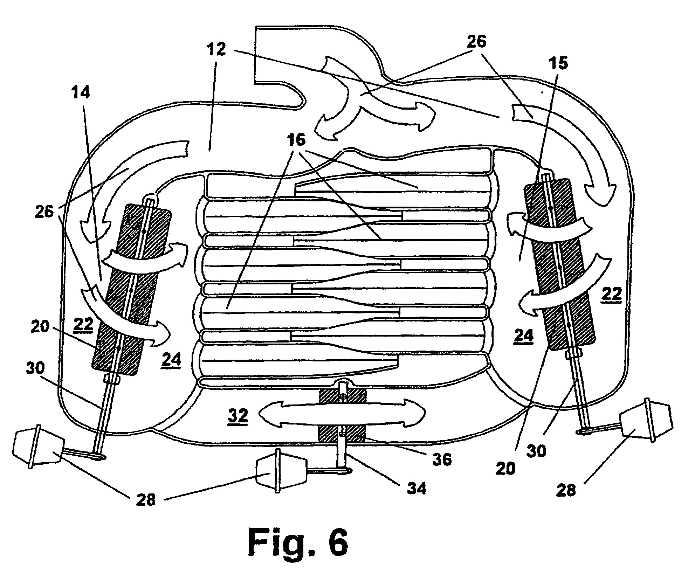

In der Schaltstufe 3 (Fig. 6) sind die Ausgleichsklappen 20 und die Resonanzklappe 36 geöffnet. Bei Motoren mit variabler Nockenwelle befinden sich die Einlaßnockenwellen bevorzugt in Frühstellung. Durch das Öffnen der Resonanzklappe 36 wird ein Massenaustausch zwischen den Luftsammlem 14 und 15 ermöglicht sowie eine Resonanzschwingung zwischen den beiden Luftsammlern 14 und 15 erzeugt. Diese Resonanzschwingung wird zur Steigerung der Zylinderfüllung im mittleren Drehzahlbereich genutzt.

Bei Motoren mit variabler Nockenwelle läßt sich zusätzlich eine Schaltstufe 4 realisieren, welche bezüglich der Stellung von Ausgleichsklappen 20 und Resonanzklappe 36 der voranstehend erläuterten Schaltstufe 2 gleicht. Durch das Öffnen der Ausgleichsklappen 20 stehen die vollen Luftsammlervolumina zur Verfügung. Auf Grund der geschlossenen Resonanzklappe 36 wird der unmittelbare Druckaustausch zwischen den beiden Luftsammlern 14 und 15 verhindert. Zusätzlich wird jedoch durch eine Spätstellung der Einlaßnockenwellen das Schwingrohraufladungssystem an obere Drehzahlbereiche angepaßt.

Durch Anpassung von Rohrlängen und Rohrdurchmesser im Ansaugsystem wird im Zusammenhang mit der Luftsammlervolumenreduktion und einer ggf. durchgeführten Verstellung von Einlaßnockenwellen eine Anpassung des Saugsystems an die jeweils vorliegende Motorkonfiguration durchgeführt.

## Patentansprüche

1. Sauganlage zur Verbrennungsluftversorgung einer Brennkraftmaschine, insbesondere für ein Kraftfahrzeug, mit wenigstens einem separaten Luftsammler (14,15), von welchem jeweils zylinderindividuelle Saugrohre (16) zu Lufteinlässen von Zylindern der Brennkraftmaschine führen, wobei die Zylinder auf wenigstens zwei Zylinderbänke (38, 40) verteilt sind, wobei ferner in dem Luftsammler (14,15) wenigstens eine Ausgleichsklappe (20) angeordnet ist, welche den Luftsammler (14,15) wahlweise in geschlossenem Zustand zu einer langen Vorsaugstrecke (12,22) teilt oder in geöffnetem Zustand statt einer langen Vorsaugstrecke (12,22) einen Luftsammler (14,15) mit vergrößertem Volumen (22,24) zur Verfügung stellt, wobei die Saugrohre (16) als Schwingrohre für obere Drehzahlbereiche der Brennkraftmaschine ausgebildet sind, **dadurch gekennzeichnet, daß** die Brennkraftmaschine eine Kurbelwelle mit 90-Grad-Kurbelwinkel und n Zylindern aufweist, wobei jeweils n/2 oder (n-1)/2 der Zylinder über jeweilige Saugrohre (16) mit einem ersten Luftsammler (14) und die anderen n/2 oder (n+1)/2 Zylinder über jeweilige Saugrohre (16) mit einem zweiten Luftsammler (15) verbunden sind, wobei die Luftsammler (14,15) jeweils benachbart zu einer Zylinderbank (38,40) und gegenüberliegend zur jeweils anderen Zylinderbank (38,40) angeordnet sind und die Saugrohre (16) eines Luftsammlers (14) teilweise die Saugrohre (16) des anderen Luftsammlers (15) kreuzend zur gegenüberliegenden Zylinderbank (38,40) führen und teilweise überkopf zu der benachbarten Zylinderbank (38,40) führen.

2. Sauganlage nach Anspruch 1, **dadurch gekennzeichnet, daß** wenigstens zwei separate Luftsammler (14,15) vorgesehen sind.

3. Sauganlage nach Anspruch 2, **dadurch gekennzeichnet, daß** je zwei Luftsammler (14,15) über ein Resonanzrohr (32) miteinander verbunden sind, wobei das Resonanzrohr (32) eine Resonanzklappe (36) zum wahlweise Öffnen oder Schließen desselben derart aufweist, daß die jeweiligen Luftsammler (14,15) wahlweise über das Resonanzrohr (32) miteinander verbunden sind oder nicht.

4. Sauganlage nach einem der vorhergehenden Ansprüche, **dadurch gekennzeichnet, daß** n = 4 ist.

5. Sauganlage nach einem der vorhergehenden Ansprüche, **dadurch gekennzeichnet, daß** n = 8 ist und eine Zündfolge der Zylinder 1 bis 8 folgendermaßen lautet 1-5-7-4-8-3-2-6.

6. Sauganlage nach Anspruch 5, **dadurch gekennzeichnet, daß** die Zylinder 1, 2, 7, 8 mit dem ersten Luftsammler (14) und die Zylinder 5, 6, 3, 4 mit dem zweiten Luftsammler (15) verbunden sind.

7. Sauganlage nach einem der vorhergehenden Ansprüche, **dadurch gekennzeichnet, daß** die Zylinder auf wenigstens zwei Zylinderdoppelbänke verteilt sind.

## Claims

1. Induction system for supplying an internal combustion engine with combustion air, in particular for a motor vehicle, having at least one separate air manifold (14, 15), from which in each case cylinder-specific induction pipes (16) lead to air intakes of cylinders of the internal combustion engine, the cylinders being distributed over at least two cylinder banks (38, 40), and furthermore at least one balancing valve (20) being arranged in the air manifold (14, 15), which valve optionally, in the closed position, divides the air manifold (14, 15) to form a long preintake length (12, 22) or, in the open position, instead of a long preintake length (12, 22), provides an air manifold (14, 15) with an increased volume (22, 24), the induction pipes (16) being designed as ram pipes for the upper speed ranges of the internal combustion engine, **characterized in that** the internal combustion engine has a crankshaft with a 90° crank angle and n cylinders, in each case n/2 or (n-1)/2 of the cylinders being connected to a first air manifold (14) via respective induction pipes (16) and the other n/2 or (n+1)/2 cylinders being connected to a second air manifold (15) via respective induction pipes (16), the air manifolds (14, 15) in each case being arranged adjacent to one cylinder bank (38, 40) and opposite to in each case the other cylinder bank (38, 40), and the induction pipes (16) of one air manifold (14) in some cases leading to the opposite cylinder bank (38, 40) in such a manner that they cross the induction pipes (16) of the other air manifold (15) and in some cases leading overhead to the adjacent cylinder bank (38, 40).

2. Induction system according to Claim 1, **characterized in that** at least two separate air manifolds (14, 15) are provided.

3. Induction system according to Claim 2, **characterized in that** in each case two air manifolds (14, 15) are connected to one another via a tuned pipe (32), the tuned pipe (32) having a tuned valve (36) for optionally opening or closing the pipe in such a manner that the respective air manifolds (14, 15) are optionally connected or not connected to one another via the tuned pipe (32).

4. Induction system according to one of the preceding claims, **characterized in that** n = 4.

5. Induction system according to one of the preceding claims, **characterized in that** n = 8 and an ignition sequence for the cylinders 1 to 8 is as follows 1-5-7-4-8-3-2-6.

6. Induction system according to Claim 5, **characterized in that** cylinders 1, 2, 7, 8 are connected to the first air manifold (14) and cylinders 5, 6, 3, 4 are connected to the second air manifold (15).

7. Induction system according to one of the preceding claims, **characterized in that** the cylinders are distributed over at least two double cylinder banks.

## Revendications

1. Système d'admission pour l'alimentation en air comburant d'un moteur à combustion interne, en particulier pour un véhicule automobile, comprenant au moins un collecteur d'air séparé (14, 15), duquel des tubes d'aspiration (16) individuels pour chaque cylindre conduisent à chaque fois à des entrées d'air de cyindres du moteur à combustion interne, le cyilndres étant répartis sur au moins deux rangées de cylindres (38, 40), au moins un clapet d'équilibrage (20) étant disposé en outre dans le collecteur d'air (14, 15), lequel divise sélectivement le collecteur d'air (14, 15) dans l'état fermé pour donner une longue section de préaspiration (12, 22), ou, dans l'état ouvert, au lieu d'une longue section de préaspiration (12, 22), fournit un collecteur d'air (14, 15) de plus grand volume (22, 24), les tubes d'aspiration (16) étant réalisés sous la forme de tubes résonnants pour les zones de régime supérieures du moteur à combustion interne, **caractérisé en ce que** le moteur à combustion interne présente un vilebrequin avec un angle de vilebrequin de 90 degrés et n cylindres, à chaque fois n/2 ou (n-1)/2 des cylindres étant connectés par le biais de tubes d'aspiration respectifs (16) à un premier collecteur d'air (14) et les autres n/2 ou (n+1)/2 cylindres étant connectés par des tubes d'aspiration respectifs (16) à un deuxième collecteur d'air (15), les collecteurs d'air (14, 15) étant disposés à chaque fois à côté d'une rangée de cylindres (38, 40) et en face de l'autre rangée de cylindre respective (38, 40), et les tubes d'aspiration (16) d'un collecteur d'air (14) conduisant à la rangée de cylindres opposée (38, 40) en croisant partiellement les tubes d'aspiration (16) de l'autre collecteur d'air (15), et conduisant partiellement par le haut à la rangée de cylindres voisine (38, 40).

2. Système d'admission selon la revendication 1, **caractérisé en ce qu'**au moins deux collecteurs d'air séparés (14, 15) sont prévus.

3. Système d'admission selon la revendication 2, **caractérisé en ce qu'**à chaque fois deux collecteurs d'air (14, 15) sont connectés l'un à l'autre par le biais d'un tube résonnant (32), le tube résonnant (32) présentant une soupape à résonnance (36) pour l'ouverture ou la fermeture sélective de celui-ci, de telle sorte que les collecteurs d'air respectifs (14, 15) soient connectés ou non l'un à l'autre de manière sélective par le biais du tube résonnant (32).

4. Système d'admission selon l'une quelconque des revendications précédentes, **caractérisé en ce que** n = 4.

5. Système d'admission selon l'une quelconque des revendications précédentes, **caractérisé en ce que** n = 8 et une séquence d'allumage des cylindres 1 à 8 est la suivante : 1-5-7-4-8-3-2-6.

6. Système d'admission selon la revendication 5, **caractérisé en ce que** les cylindres 1, 2, 7, 8 sont connectés au premier collecteur d'air (14) et les cylindres 5, 6, 3, 4 au deuxième collecteur d'air (15).

7. Système d'admission selon l'une quelconque des revendications précédentes, **caractérisé en ce que** les cylindres sont répartis sur au moins deux rangées doubles de cylindres.
